# EUROPEAN PATENT SPECIFICATION

(11) **EP 4 027 699 B1**
(45) Date of publication and mention of the grant of the patent: **01.04.2026**
(21) Application number: 20859905.0
(22) Date of filing: 02.09.2020
(51) Int. Cl.: H04W 36/00

(54) **METHOD AND APPARATUS FOR DUAL-MODE SINGLE-STANDBY WIRELESS VOICE CALL CONTINUITY BEFORE RINGING**
VERFAHREN UND VORRICHTUNG FÜR DUALMODUS-SINGLE-STANDBY-DRAHTLOSSPRACHANRUFSKONTINUITÄT VOR DEM KLINGELN
PROCÉDÉ ET APPAREIL POUR LA CONTINUITÉ D'APPEL VOCAL SANS FIL À POSITION D'ATTENTE UNIQUE À DOUBLE MODE AVANT SONNERIE

(30) Priority: 02.09.2019 CN 201910822412
(43) Date of publication of application: 13.07.2022
(73) Proprietor: ZTE Corporation, Shenzhen, Guangdong 518057 (CN)
(72) Inventor: ZHAO, Shirong, Shenzhen, Guangdong 518057 (CN)
(74) Representative: Novagraaf Technologies
(86) International application number: PCT/CN2020/113082
(87) International publication number: WO 2021/043177

(56) References cited:
- EP-A1- 3 148 252
- EP-A1- 3 393 169
- CN-A- 104 994 542
- CN-A- 106 888 486
- CN-A- 107 222 896
- CN-A- 108 966 274
- CN-A- 109 688 610
- CN-A- 109 688 610
- JP-A- 2016 082 467

## Description

### Technical Field

The present disclosure relates to the field of communications technologies, and in particular, to a method and apparatus for pre-alerting Single Radio Voice Call Continuity (bSRVCC).

### Background

A Single Radio Voice Call Continuity (SRVCC) is a continuity solution based on an IP Multimedia Subsystem (IMS) Voice over Long Time Evolution (VoLTE) service and is proposed by the 3rd Generation Partnership Project (3GPP). The SRVCC mainly addresses how to ensure that a dual-mode single-standby radio frequency User Equipment (UE) smoothly performs handover between a VoLTE voice controlled by the IMS and a Circuit Switch (CS) domain voice in a case where the dual-mode single-standby UE moves between a Packet Switch (PS) domain of an LTE network and a Circuit Switch (CS) domain network of the second Generation mobile communication (2G)/third Generation mobile communication (3G). An Enhanced SRVCC (eSRVCC) adds an Access Transfer Control Function (ATCF) network element and an Access Transfer Gateway (ATGW) network element on the basis of the SRVCC. The ATCF network element is a network element provided in front of the SCC AS, and serves as an anchor point of the signaling plane in replace of the SCC AS. The ATGW network element serves as an anchor point of the media plane. Compared with the SRVCC, the eSRVCC, while ensuring voice call continuity, minimizes the handover delay and improves the success rate of handover.

At present, the bSRVCC handover procedure of the terminating user is not clearly and completely defined in the 3GPP specification, and therefore the success rate during the bSRVCC handover of the terminating user is relatively low in the related art.

CN109688610 A discloses a method, device and storage medium for switching single-standby voice continuous service. However, the above problem still remains unsolved.

### Summary

The present disclosure provides a method and apparatus for pre-alerting single radio voice call continuity, which can solve the problem that the success rate of b SRVCC handover of a terminating user is relatively low due to the fact that a bSRVCC handover procedure of a terminating user is not clearly and completely defined in relevant technical specifications.

The present disclosure is set out in the appended set of claims.

### Brief Description of the Drawings

Fig. 1 is a schematic diagram of an eSRVCC, an aSRVCC and a bSRVCC divided according to a call signaling sequence according to some embodiments of the present disclosure;
Fig. 2 is a flowchart in which bSRVCC of a terminating user is converted to an aSRVCC according to some embodiments of the present disclosure;
Fig. 3 is a flowchart in which bSRVCC of a terminating user is converted to an eSRVCC according to some embodiments of the present disclosure; and
Fig. 4 is a flowchart of a method for pre-alerting single radio voice call continuity according to some embodiments of the present disclosure.

### Detailed Description

In order to further explain the technical means adopted by the present disclosure for achieving the predetermined purpose and the effects of the technical means, the present disclosure will be described in detail hereinafter in conjunction with the accompanying drawings and exemplary embodiments.

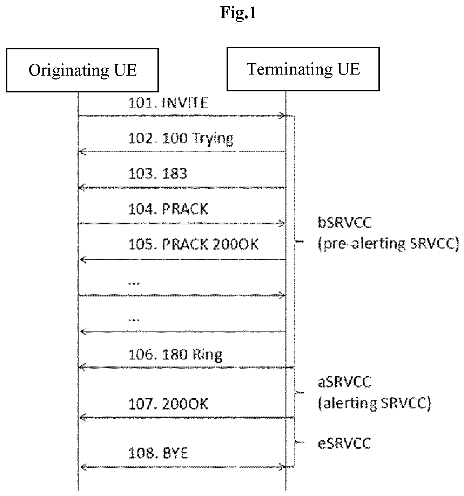

As shown in Fig. 1, eSRVCC can be divided into eSRVCC, aSRVCC and bSRVCC according to a call signaling order.

The eSRVCC may be understood as an SRVCC handover after a call enters a steady state.

The aSRVCC refers to an enhanced technical solution, before an originating user and a terminating user are connected in the calling process, of SRVCC handover of the originating user after the originating user can hear a ring back tone or of SRVCC handover of the terminating user after the terminating user starts alerting.

The bSRVCC refers to an enhanced technical solution, at a phase that an originating user has initiated a call but the terminating user has not yet started alerting, of SRVCC handover occurring at the originating user or the terminating user. From the perspective of radio resource reservation, since this procedure consumes a time length at a second-level (normally 3-5 seconds, in a case of bad network state, the time consumption may be longer), there is a relatively high probability that the user encounters SRVCC handover in this phase. If the bSRVCC handover is supported, the success rate of the SRVCC handover can be improved, thereby improving the user experience. However, the current 3GPP specification does not clearly and completely define the flow of the bSRVCC handover procedure of the terminating user, so the success rate of the bSRVCC handover of the terminating user is relatively low.

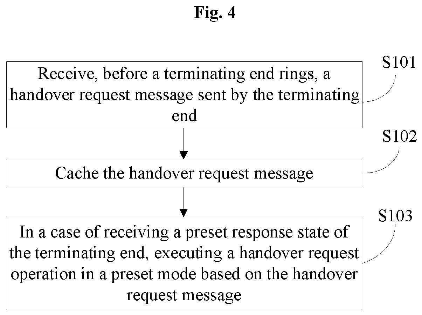

As shown in Fig. 4, a method for pre-alerting single radio voice call continuity including operations S101 to S103.

At S101, a handover request message sent by a terminating end is received before the terminating end alerts.

At S102, the handover request message is cached.

At S103, in a case where a preset response state of the terminating end is received, a handover request operation is executed in a preset mode based on the handover request message.

It should be noted that, the preset mode herein may be understood as a clearly and completely defined handover mode of the aSRVCC and eSRVCC in the existing 3GPP specification. In other words, the present application mainly solves the problem of bSRVCC of the terminating end.

According to the method for pre-alerting single radio voice call continuity in the present disclosure, bSRVCC handover of the terminating end can be converted into aSRVCC/eSRVCC handover clearly and completely defined by the 3GPP specification, which improves the success rate of the bSRVCC handover of the terminating user, thereby improving the total success rate of VoLTE SRVCC handover in an LTE network, and optimizing call experience of VoLTE users in the LTE network.

According to the present disclosure, the operation that the handover request message sent by the terminating end is received before the terminating end alerts includes:
the handover request message sent by a base station and processed by a control node and an enhanced mobile switching center in sequence is received before the terminating end alerts.

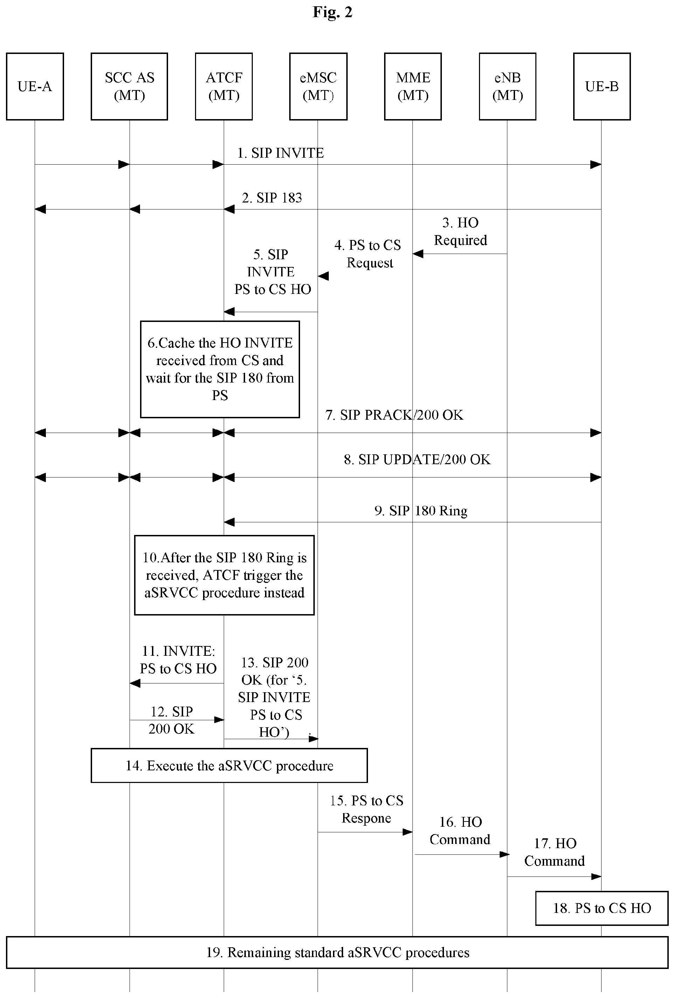

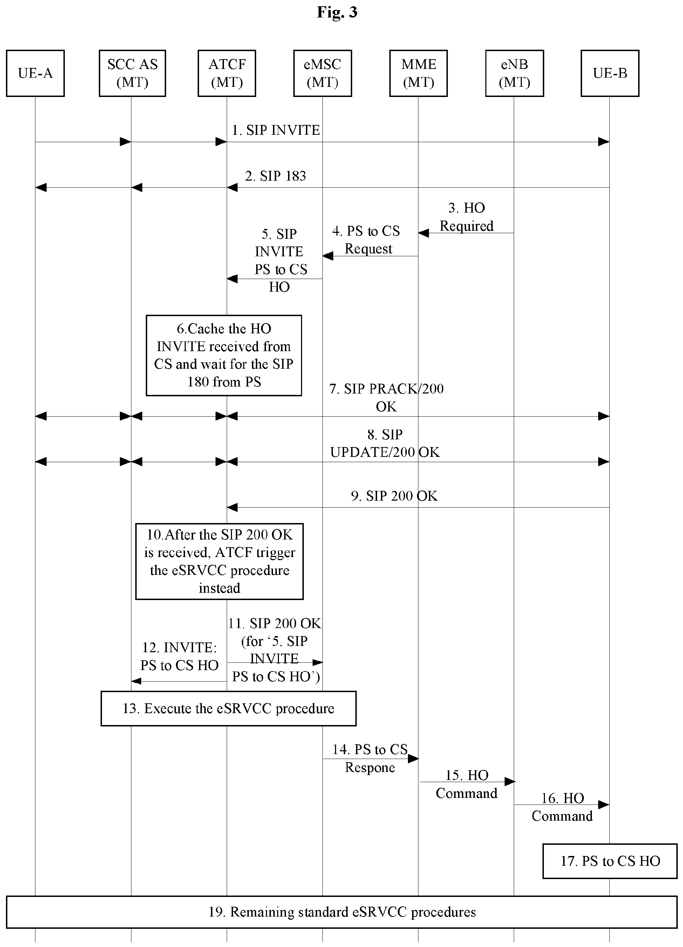

As shown in Fig. 2 and Fig. 3, the operation that the handover request message sent by the terminating end is received before the terminating end alerts includes the following operations.

A UE A sends a call request (INVITE) to a UE B on the terminating end.

The UE B replies with a 183 response or other response states in response to the call request.

Before the terminating end alerts (namely, before receiving an SIP 180 Ring from the terminating end), a base station (e.g., eNodeB) of the terminating end initiates a handover request to a signaling processing control node (e.g., a Mobility Management Entity (MME)) of the terminating end.

The signaling processing control node (e.g., MME) of the terminating end initiates a request for "handover from PS domain to CS domain" to an enhanced Mobile Switching Center (eMSC) of the terminating end.

The eMSC of the terminating end sends an INVITE SIP request for "handover from PS domain to CS domain" to an ATCF of the terminating end. Thus, a handover request message initiated by the terminating end is received before the terminating end alerts.

According the present disclosure, the method further includes: a time length threshold is set, and the handover request operation is executed in the preset mode in a case where the preset response state of the terminating end is received within the time length threshold starting from a moment of caching the handover request message.

It should be noted that the ATCF network element receives the INVITE SIP request for "handover from PS domain to CS domain", and after the SIP protocol stack transaction is completed, determines that the PS domain of the user requiring handover has not received the 180 Ring or 200 OK in response to the INVITE request. In a case where the PS domain of the user requiring handover has not received the 180 Ring or 200 OK in response to the INVITE request, the ATCF network element does not process the handover INVITE request and performs the following operations.

A flag for indicating that an INVITE SIP request for "handover from PS domain to CS domain" has been received is set in a call data area of the PS domain.

The handover request is cached, and a cache timeout timer (for example, 2 seconds, which may be set according to a local policy) is set.

In a case where the 180 Ring in response to the INVITE request is received from the PS domain before the cache expires, an aSRVCC procedure is entered to process the handover INVITE request. In a case where the 200 OK in response to the INVITE request is received from the PS domain before the cache expires, an eSRVCC procedure is entered to process the handover INVITE request.

According to some embodiments of the present disclosure, the method further includes: the handover request operation is directly performed in a case where the preset response state of the terminating end is not received within the time length threshold starting from the moment of caching the handover request message.

In other words, in a case where the 180 Ring or 200 OK in response to the INVITE request is not received from the PS domain before the cache expires, the handover INVITE request is processed according to the bSRVCC procedure to perform the handover request operation.

According to some embodiments of the present disclosure, the operation of executing, in a case of receiving the preset response state of the terminating end, the handover request operation in the preset mode based on the handover request message includes the following operations.

In a case where an alerting response state of the terminating end is received, i.e., in a case where the 180 Ring of the terminating end is received as shown in Fig. 2, based on the cached handover request message, the handover request operation is executed in an alerting state handover mode (aSRVCC).

In a case where a call success response state of the terminating end is received, i.e., in a case where the 200 OK of the terminating end is received as shown in Fig. 3, based on the cached handover request message, the handover request operation is executed in a steady handover mode (eSRVCC).

An apparatus for pre-alerting single radio voice call continuity according to some embodiments of the present disclosure includes a reception module, a storage module, and an execution module.

The reception module is configured to receive, before a terminating end alerts, a handover request message sent by the terminating end.

The storage module is configured to cache the handover request message.

The execution module is configured to, in a case of receiving a preset response state of the terminating end, execute a handover request operation in a preset mode based on the handover request message.

According to the apparatus for pre-alerting single radio voice call continuity in the embodiments of the present disclosure, bSRVCC handover of the terminating end can be converted into aSRVCC/eSRVCC handover clearly and completely defined in the 3GPP specification, which improves the success rate of the handover in this situation.

According to some embodiments of the present disclosure, the reception module is configured to receive, before the terminating end alerts, the handover request message sent from a base station and processed by a control node and an enhanced mobile switching center in sequence.

As shown in Fig. 2 and Fig. 3, the operation that the handover request message sent by the terminating end is received before the terminating end alerts includes the following operations.

A UE A sends a call request (INVITE) to a UE B on the terminating end.

The UE B replies with a 183 response or other response states in response to the call request.

Before the terminating end alerts (namely, before receiving an SIP 180 Ring from the terminating end), a base station (e.g., eNodeB) of the terminating end initiates a handover request to a signaling processing control node (e.g., a Mobility Management Entity (MME)) of the terminating end.

The signaling processing control node (e.g., MME) of the terminating end initiates a request for "handover from PS domain to CS domain" to an enhanced Mobile Switching Center (eMSC) of the terminating end.

The eMSC of the terminating end sends an INVITE SIP request for "handover from PS domain to CS domain" to an ATCF of the terminating end. Thus, a handover request message initiated by the terminating end is received before the terminating end alerts.

According to some embodiments of the present disclosure, the apparatus may further include: a timing control module, configured to set a time length threshold, wherein the execution module is configured to execute the handover request operation in the preset mode in a case where the preset response state of the terminating end is received within the time length threshold starting from a moment of caching the handover request message.

It should be noted that the ATCF network element receives the INVITE SIP request for "handover from PS domain to CS domain", and after the SIP protocol stack transaction is completed, determines that the PS domain of the user requiring handover has not received the 180 Ring or 200 OK in response to the INVITE request. In a case where the PS domain of the user requiring handover has not received the 180 Ring or 200 OK in response to the INVITE request, the ATCF network element does not process the handover INVITE request and performs the following operations.

A flag for indicating that an INVITE SIP request for "handover from PS domain to CS domain" has been received is set in a call data area of the PS domain.

The handover request is cached, and a cache timeout timer (for example, 2 seconds, which may be set according to a local policy) is set.

In a case where the 180 Ring in response to the INVITE request is received from the PS domain before the cache expires, an aSRVCC procedure is entered to process the handover INVITE request. In a case where the 200 OK in response to the INVITE request is received from the PS domain before the cache expires, an eSRVCC procedure is entered to process the handover INVITE request.

According to some embodiments of the present disclosure, the execution module is configured to directly perform the handover request operation in a case where the preset response state of the terminating end is not received within the time length threshold starting from the moment of caching the handover request message.

In other words, in a case where the 180 Ring or 200 OK in response to the INVITE request is not received from the PS domain before the cache expires, the handover INVITE request is processed according to the bSRVCC procedure to perform the handover request operation.

According to some embodiments of the present disclosure, the execution module is configured to:
in a case where an alerting response state of the terminating end is received, i.e., in a case where the 180 Ring of the terminating end is received as shown in Fig. 2, based on the cached handover request message, execute the handover request operation in an alerting state handover mode (aSRVCC);

In a case where a call success response state of the terminating end is received, i.e., in a case where the 200 OK of the terminating end is received as shown in Fig. 3, based on the cached handover request message, execute the handover request operation in a steady handover mode (eSRVCC).

The method for single radio voice call continuity before the terminating end alerts according to the embodiments of the present disclosure will be described below in two exemplary embodiments in detail with reference to Fig. 2 and Fig. 3.

### Embodiment 1

As shown in Fig. 2, Fig. 2 shows a processing flow for converting a bSRVCC handover of the terminating end into an aSRVCC handover clearly and completely defined in the 3GPP specification through the cooperation of an ATCF network element and an eMSC network element.

At operation 1, a UE A sends an INVITE request to a UE B of the terminating end.

At operation 2, the UE B replies with a 183 response.

At operation 3, an eNodeB of the terminating end initiates a handover request to an MME of the terminating end.

At operation 4, the MME of the terminating end initiates a request for "handover from PS domain to CS domain" to an eMSC of the terminating end.

At operation 5, the eMSC of the terminating end sends an INVITE SIP request for "handover from PS domain to CS domain" to an ATCF of the terminating end.

At operation 6, after the ATCF network element receives the INVITE SIP request for "handover from PS domain to CS domain", and the SIP protocol stack transaction is completed, the ATCF network element determines that the PS domain call of the user requiring handover has not received the 180 Ring or 200 OK in response to the INVITE request. In a case where the 180 Ring or 200 OK in response to the INVITE request is not received, the handover INIVTE request is not processed, and the following operations are performed.
1) A flag indicating that an INVITE SIP request for "handover from PS domain to CS domain" has been received is set in a call data area of the PS domain.
2) The handover request is cached, and a cache timeout timer (for example, 2 seconds, which may be set according to a local policy) is set.

In a case where the 180 Ring in response to the INVITE request is received from the PS domain before the cache expires, an aSRVCC procedure is entered to process the handover INVITE request; otherwise, the handover INVITE request is still processed according to the bSRVCC procedure.

At operations 7-8, the UE A of the originating end performs message interaction of PRACK/200 OK of PRACK and UPDATE/UPDATE of 200 OK with the PS domain call of the UE B of the terminating end.

At operation 9, the UE B alerts.

At operation 10, after receiving a 180 ring of the PS domain call, the ATCF network element checks that the flag indicating that the INVITE SIP request for "handover from PS domain to CS domain" has been received is already set in a call data area of the PS domain, then triggers the INVITE request cached in "operation 6" to perform the aSRVCC handover procedure.

At operation 11, the ATCF network element sends the handover INVITE request to an application server (SCC AS).

At operation 12, the SCC AS network element replies with a 200 OK response for the handover INVITE request.

At operation 13, the ATCF network element replies with a 200 OK response for the handover INVITE request of operation 5.

At operation 14, the SCC AS network element, the ATCF network element and the eMSC network element continue to execute the aSRVCC procedure.

At operation 15, the eMSC of the terminating end replies to the MME of the terminating end a response to the request for "handover from PS domain to CS domain".

At operation 16, the MME of the terminating end replies with a response for the handover request to the eNodeB of the terminating end.

At operation 17, the eNodeB notifies the UE B to perform handover.

At operation 18, the UE B performs "PS to CS" handover procedure.

At operation 19, continue with the standard aSRVCC procedure.

It should be noted that, in this embodiment, operation 2 is optional, and there may also be other messages, such as PRACK/200 OK of PRACK and UPDATE/200 OK of UPDATE, as long as the messages are messages before the 180 Ring or 200 OK response in response to the INVITE request (in the case of automatic response, there is no 180 Ring, and the UE B directly replies with a 200 OK response).

### Embodiment 2

As shown in Fig. 3, Fig. 3 shows a processing flow for converting a bSRVCC handover of the terminating end into an eSRVCC handover clearly and completely defined in the 3GPP specification through the cooperation of an ATCF network element and an eMSC network element.

At operation 1, a UE A sends an INVITE request to a UE B of the terminating end.

At operation 2, the UE B replies with a 183 response.

At operation 3, an eNodeB of the terminating end initiates a handover request to an MME of the terminating end.

At operation 4, the MME of the terminating end initiates a request for "handover from PS domain to CS domain" to an eMSC of the terminating end.

At operation 5, the eMSC of the terminating end sends an INVITE SIP request for "handover from PS domain to CS domain" to an ATCF of the terminating end.

At operation 6, after the ATCF network element receives the INVITE SIP request for "handover from PS domain to CS domain", and the SIP protocol stack transaction is completed, the ATCF network element determines that the PS domain call of the user requiring handover has not received the 180 Ring or 200 OK in response to the INVITE request. In a case where the 180 Ring or 200 OK in response to the INVITE request is not received, the handover INIVTE request is not processed, and the following operations are performed.
1) A flag indicating that an INVITE SIP request for "handover from PS domain to CS domain" has been received is set in a call data area of the PS domain.
2) The handover request is cached, and a cache timeout timer (for example, 2 seconds, which may be set according to a local policy) is set.

In a case where the 200 OK in response to the INVITE request is received from the PS domain before the cache expires, an eSRVCC procedure is entered to process the handover INVITE request; otherwise, the handover INVITE request is still processed according to the bSRVCC procedure.

At operations 7-8, the UE A of the originating end performs message interaction of PRACK/200 OK of PRACK and UPDATE/UPDATE of 200 OK with the PS domain call of the UE B of the terminating end.

At operation 9, the UE B automatically connects the call (without alerting).

At operation 10, after receiving the 200 OK response of the INVITE of the PS domain call, the ATCF network element checks that the flag indicating that the INVITE SIP request for "handover from PS domain to CS domain" has been received is already set in a call data area of the PS domain, then triggers the INVITE request cached in operation 6 to perform the eSRVCC handover procedure.

At operation 11, the ATCF network element replies with a 200 OK response for the handover INVITE request of operation 5.

At operation 12, the ATCF network element sends a handover INVITE request to an SCC AS.

At operation 13, the SCC AS network element, the ATCF network element and the eMSC network element continue to execute the eSRVCC procedure.

At operation 15, the eMSC of the terminating end replies to the MME of the terminating end a response to the request for "handover from PS domain to CS domain".

At operation 16, the MME of the terminating end replies with a response to the handover request to the eNodeB of the terminating end.

At operation 17, the eNodeB notifies the UE B to perform handover.

At operation 18, the UE B performs "PS to CS" handover procedure.

At operation 19, continue with the standard eSRVCC procedure.

It should be noted that, in this embodiment, operation 2 is optional, and there may also be other messages, such as PRACK/200 OK of PRACK and UPDATE/200 OK of UPDATE, as long as the messages are messages before the 180 Ring or 200 OK response in response to the INVITE request (in the case of automatic response, there is no 180 Ring, and the UE B directly replies with a 200 OK response).

In operation 9, "the UE B automatically connects the call (without alerting)" may also be that the Ring message of the UE B is not received by the ATCF network element due to reasons such as network failure, and the ATCF network element only receives the 200 OK response of the INVITE request of the PS domain call.

An electronic device according to some embodiments of the present disclosure includes a memory, a processor and at least one application program stored in the memory and configured to be executed by the processor, wherein the at least one application program is configured to execute the foregoing method for pre-alerting single radio voice call continuity.

According to the electronic device in the embodiments of the present disclosure, by executing the described method for pre-alerting single radio voice call continuity, bSRVCC handover of the terminating end can be converted into aSRVCC/eSRVCC handover clearly and completely defined in the 3GPP specification, which improves the success rate of the bSRVCC handover of the terminating user, thereby improving the total success rate of VoLTE SRVCC handover in an LTE network, and optimizing call experience of VoLTE users in the LTE network.

A readable storage medium according to some embodiments of the present disclosure stores a computer program thereon, when the computer program, when being executed by a processor, implements the foregoing method for pre-alerting single radio voice call continuity.

The readable storage medium according to some embodiments of the present disclosure stores the described method for pre-alerting single radio voice call continuity. By executing the described method for pre-alerting single radio voice call continuity, bSRVCC handover of the terminating end can be converted into aSRVCC/eSRVCC handover clearly and completely defined in the 3GPP specification, which improves the success rate of the bSRVCC handover of the terminating user, thereby improving the total success rate of VoLTE SRVCC handover in an LTE network, and optimizing call experience of VoLTE users in the LTE network.

## Claims

1. A method for pre-alerting single radio voice call continuity of a terminating user, comprising:
receiving (S101), by an Access Transfer Control Function, ATCF, of a terminating end before receiving an SIP 180 Ring from User Equipment, UE, of the terminating end, a handover request message sent by the terminating end;
caching (S102), by the ATCF of the terminating end, the handover request message;
in a case of receiving the SIP 180 Ring of the terminating end, executing, by the ATCF of the terminating end, the handover request operation in an alerting Single Radio Voice Call Continuity, aSRVCC, procedure based on the cached handover request message; and
in a case of receiving an SIP 200 OK of the terminating end, executing, by the ATCF of the terminating end, the handover request operation in an Enhanced Single Radio Voice Call Continuity, eSRVCC, procedure based on the cached handover request message.

2. The method for pre-alerting single radio voice call continuity according to claim 1, wherein receiving (S101), by an ATCF of the terminating end before receiving an SIP 180 Ring from UE of the terminating end, a handover request message sent by the terminating end comprises:
receiving, before receiving the SIP 180 Ring from the UE of the terminating end, the handover request message sent from a base station and processed by a control node and an enhanced mobile switching center in sequence.

3. The method for pre-alerting single radio voice call continuity according to claim 1, wherein
in a case of receiving the SIP 180 Ring of the terminating end, executing, by the ATCF of the terminating end, the handover request operation in the aSRVCC procedure based on the cached handover request message comprises: executing, by the ATCF of the terminating end, the handover request operation in the aSRVCC procedure in a case where the SIP 180 Ring is received within a time length threshold starting from a moment of caching the handover request message;
or,
in a case of receiving the SIP 200 OK of the terminating end, executing, by the ATCF of the terminating end, the handover request operation in the eSRVCC procedure based on the cached handover request message comprises: executing, by the ATCF of the terminating end, the handover request operation in the eSRVCC procedure in a case where the SIP 200 OK is received within a time length threshold starting from a moment of caching the handover request message.

4. The method for pre-alerting single radio voice call continuity according to claim 3, further comprising:
directly performing the handover request operation in a case where the SIP 180 Ring or SIP 200 OK of the terminating end is not received within the time length threshold starting from the moment of caching the handover request message.

5. An apparatus for pre-alerting single radio voice call continuity of a terminating user, the apparatus being applied in an Access Transfer Control Function, ATCF, of a terminating end and comprising:
a reception module, configured to receive, before receiving an SIP 180 Ring from User Equipment, UE, of the terminating end, a handover request message sent by the terminating end;
a storage module, configured to cache the handover request message; and
an execution module, configured to, in a case of receiving the SIP 180 Ring of the terminating end, execute the handover request operation in an alerting Single Radio Voice Call Continuity, aSRVCC, procedure based on the cached handover request message; and in a case of receiving an SIP 200 OK of the terminating end, execute the handover request operation in an Enhanced Single Radio Voice Call Continuity, eSRVCC, procedure based on the cached handover request message.

6. The apparatus for pre-alerting single radio voice call continuity according to claim 5, wherein the reception module is configured to:
receive, before receiving the SIP 180 Ring from the UE of the terminating end, the handover request message sent from a base station and processed by a control node and an enhanced mobile switching center in sequence.

7. The apparatus for pre-alerting single radio voice call continuity according to claim 5, wherein the execution module is configured to:
execute the handover request operation in the aSRVCC procedure in a case where the SIP 180 Ring of the terminating end is received within a time length threshold starting from a moment of caching the handover request message;
or,
execute the handover request operation in the eSRVCC procedure in a case where the SIP 200 OK of the terminating end is received within a time length threshold starting from a moment of caching the handover request message.

8. The apparatus for pre-alerting single radio voice call continuity according to claim 7, wherein the execution module is further configured to:
directly perform the handover request operation in a case where the SIP 180 Ring or SIP 200 OK of the terminating end is not received within the time length threshold starting from the moment of caching the handover request message.

9. A readable storage medium, on which a computer program is stored, wherein the computer program, when being executed by a processor, implements the method for pre-alerting single radio voice call continuity according to any one of claims 1 to 4.

## Patentansprüche

1. Verfahren zum Vorwarnen für die Single-Radio-Voice-Call-Continuity eines Endbenutzers, umfassend:
Empfangen (S101) durch eine Zugangsübertragungssteuerungsfunktion, ATCF, eines beendenden Endes vor dem Empfangen eines SIP 180 Anrufs von einer Benutzereinrichtung, UE, des beendenden Endes, einer Übergabeanforderungsnachricht, die durch das beendende Ende gesendet wird;
Zwischenspeichern (S102), durch die ATCF des beendenden Endes, der Übergabeanforderungsnachricht;
in einem Fall des Empfangens des SIP 180 Anrufs des beendenden Endes, Ausführen, durch die ATCF des beendenden Endes, des Übergabeanforderungsvorgangs in einem Alerting-Single-Radio-Voice-Call-Continuity-Verfahren, aSRVCC-Verfahren, basierend auf der zwischengespeicherten Übergabeanforderungsnachricht; und
in einem Fall des Empfangens eines SIP 200 OK des beendenden Endes, Ausführen, durch die ATCF des beendenden Endes, des Übergabeanforderungsvorgangs in einem Enhanced-Single-Radio-Voice-Call-Continuity-Verfahren, eSRVCC-Verfahren, basierend auf der zwischengespeicherten Übergabeanforderungsnachricht.

2. Verfahren zum Vorwarnen für die Single-Radio-Voice-Call-Continuity nach Anspruch 1, wobei das Empfangen (S101) durch eine ATCF des beendenden Endes vor dem Empfangen eines SIP 180 Anrufs von der UE des beendenden Endes einer Übergabeanforderungsnachricht, die durch das beendende Ende gesendet wird, umfasst:
Empfangen, vor dem Empfangen des SIP 180 Anrufs von der UE des beendenden Endes, der Übergabeanforderungsnachricht, die von einer Basisstation gesendet und durch einen Steuerknoten und eine erweiterte mobile Vermittlungsstelle nacheinander verarbeitet wird.

3. Verfahren zum Vorwarnen für die Single-Radio-Voice-Call-Continuity nach Anspruch 1, wobei
in einem Fall des Empfangen des SIP 180 Anrufs des beendenden Endes, das Ausführen, durch die ATCF des beendenden Endes, des Übergabeanforderungsvorgangs in dem aSRVCC-Verfahren basierend auf der zwischengespeicherten Übergabeanforderungsnachricht umfasst: Ausführen, durch die ATCF des beendenden Endes, des Übergabeanforderungsvorgangs in dem aSRVCC-Verfahren in einem Fall, in dem der SIP 180 Anruf innerhalb einer Zeitlängenschwelle empfangen wird, die von einem Moment des Zwischenspeicherns der Übergabeanforderungsnachricht beginnt;
oder
in einem Fall des Empfangens des SIP 200 OK des beendenden Endes, das Ausführen, durch die ATCF des beendenden Endes, des Übergabeanforderungsvorgangs in dem eSRVCC-Verfahren basierend auf der zwischengespeicherten Übergabeanforderungsnachricht umfasst: Ausführen, durch die ATCF des beendenden Endes, des Übergabeanforderungsvorgangs in dem eSRVCC-Verfahren in einem Fall, in dem das SIP 200 OK innerhalb einer Zeitlängenschwelle empfangen wird, die von einem Moment des Zwischenspeicherns der Übergabeanforderungsnachricht beginnt.

4. Verfahren zum Vorwarnen für die Single-Radio-Voice-Call-Continuity nach Anspruch 3, ferner umfassend:
direktes Durchführen des Übergabeanforderungsvorgangs in einem Fall, in dem der SIP 180 Anruf oder das SIP 200 OK des beendenden Endes nicht innerhalb der Zeitlängenschwelle empfangen wird, die von dem Moment des Zwischenspeicherns der Übergabeanforderungsnachricht beginnt.

5. Einrichtung für das Vorwarnen für die Single-Radio-Voice-Call-Continuity eines Endbenutzers, wobei die Einrichtung in einer Zugangsübertragungssteuerungsfunktion, ATCF, eines beendenden Endes angewendet wird und umfassend:
ein Empfangsmodul, das konfiguriert ist, um vor dem Empfangen eines SIP 180 Anrufs von einer Benutzereinrichtung, UE, des beendenden Endes eine Übergabeanforderungsnachricht, die durch das beendende Ende gesendet wird, zu empfangen;
ein Speichermodul, das konfiguriert ist, um die
Übergabeanforderungsnachricht zwischenzuspeichern; und
ein Ausführungsmodul, das konfiguriert ist, um in einem Fall des Empfangs des SIP 180 Anrufs des beendenden Endes, den Übergabeanforderungsvorgang in einem Alerting-Single-Radio-Voice-Call-Continuity-Verfahren, aSRVCC-Verfahren, basierend auf der zwischengespeicherten Übergabeanforderungsnachricht auszuführen; und in einem Fall des Empfangens eines SIP 200 OK des beendenden Endes, den Übergabeanforderungsvorgang in einem Enhanced-Single-Radio-Voice-Call-Continuity-Verfahren, eSRVCC-Verfahren, basierend auf der zwischengespeicherten Übergabeanforderungsnachricht auszuführen.

6. Einrichtung für das Vorwarnen für die Single-Radio-Voice-Call-Continuity nach Anspruch 5, wobei das Empfangsmodul konfiguriert ist zum:
Empfangen, vor dem Empfangen des SIP 180 Anrufs von der UE des beendenden Endes, der Übergabeanforderungsnachricht, die von einer Basisstation gesendet und durch einen Steuerknoten und eine erweiterte mobile Vermittlungsstelle nacheinander verarbeitet wird.

7. Einrichtung für das Vorwarnen für die Single-Radio-Voice-Call-Continuity nach Anspruch 5, wobei das Ausführungsmodul konfiguriert ist zum:
Ausführen des Übergabeanforderungsvorgangs in dem aSRVCC-Verfahren in einem Fall, in dem der SIP 180 Anruf des beendenden Endes innerhalb einer Zeitlängenschwelle empfangen wird, die von einem Moment des Zwischenspeicherns der Übergabeanforderungsnachricht beginnt;
oder
Ausführen des Übergabeanforderungsvorgangs in dem eSRVCC-Verfahren in einem Fall, in dem das SIP 200 OK des beendenden Endes innerhalb einer Zeitlängenschwelle empfangen wird, die von einem Moment des Zwischenspeicherns der Übergabeanforderungsnachricht beginnt.

8. Einrichtung für das Vorwarnen für die Single-Radio-Voice-Call-Continuity nach Anspruch 7, wobei das Ausführungsmodul ferner konfiguriert ist zum:
direktes Durchführen des Übergabeanforderungsvorgangs in einem Fall, in dem der SIP 180 Anruf oder das SIP 200 OK des beendenden Endes nicht innerhalb der Zeitlängenschwelle empfangen wird, die von dem Moment des Zwischenspeicherns der Übergabeanforderungsnachricht beginnt.

9. Lesbares Speichermedium, auf dem ein Computerprogramm gespeichert ist, wobei das Computerprogramm, wenn es durch einen Prozessor ausgeführt wird, das Verfahren zum Vorwarnen für die Single-Radio-Voice-Call-Continuity nach einem der Ansprüche 1 bis 4 implementiert.

## Revendications

1. Procédé de pré-alerte de continuité d'appel vocal radio unique d'un utilisateur de terminaison, comprenant :
la réception (S101), par une fonction de commande de transfert d'accès, ATCF, d'une extrémité de terminaison avant la réception d'un SIP 180 sonnerie à partir d'un équipement utilisateur, UE, de l'extrémité de terminaison, d'un message de demande de transfert envoyé par l'extrémité de terminaison ;
la mise en cache (S102), par l'ATCF de l'extrémité de terminaison, du message de demande de transfert ;
en cas de réception du SIP 180 sonnerie de l'extrémité de terminaison, l'exécution, par l'ATCF de l'extrémité de terminaison, de l'opération de demande de transfert dans une procédure de continuité d'appel vocal radio unique d'alerte, aSRVCC, sur la base du message de demande de transfert mis en cache ; et
en cas de réception d'un SIP 200 OK de l'extrémité de terminaison, l'exécution, par l'ATCF de l'extrémité de terminaison, de l'opération de demande de transfert dans le cadre d'une procédure de continuité d'appel vocal radio unique améliorée, eSRVCC, sur la base du message de demande de transfert mis en cache.

2. Procédé de pré-alerte d'une continuité d'appel vocal radio unique selon la revendication 1, dans lequel la réception (S101), par une ATCF de l'extrémité de terminaison avant la réception d'un SIP 180 sonnerie à partir d'un UE de l'extrémité de terminaison, d'un message de demande de transfert envoyé par l'extrémité de terminaison comprend :
la réception, avant la réception du SIP 180 sonnerie à partir de l'UE de l'extrémité de terminaison, du message de demande de transfert envoyé à partir d'une station de base et traité par un nœud de commande et un centre de commutation mobile amélioré en séquence.

3. Procédé de pré-alerte de continuité d'appel vocal radio unique selon la revendication 1, dans lequel
dans un cas de réception du SIP 180 sonnerie de l'extrémité de terminaison, l'exécution, par l'ATCF de l'extrémité de terminaison, de l'opération de demande de transfert dans la procédure aSRVCC sur la base du message de demande de transfert mis en cache comprend : l'exécution, par l'ATCF de l'extrémité de terminaison, de l'opération de demande de transfert dans la procédure aSRVCC dans un cas où la SIP 180 sonnerie est reçue dans un seuil de longueur de temps commençant à partir d'un moment de mise en cache du message de demande de transfert ;
ou,
en cas de réception du SIP 200 OK de l'extrémité de terminaison, l'exécution, par l'ATCF de l'extrémité de terminaison, de l'opération de demande de transfert dans la procédure eSRVCC sur la base du message de demande de transfert mis en cache comprend : l'exécution, par l'ATCF de l'extrémité de terminaison, de l'opération de demande de transfert dans la procédure eSRVCC dans un cas où le SIP 200 OK est reçu dans un seuil de longueur de temps commençant à partir d'un moment de mise en cache du message de demande de transfert.

4. Procédé de pré-alerte d'une continuité d'appel vocal radio unique selon la revendication 3, comprenant en outre :
la réalisation directe de l'opération de demande de transfert dans un cas où le SIP 180 sonnerie ou le SIP 200 OK de l'extrémité de terminaison n'est pas reçu dans le seuil de longueur de temps commençant à partir du moment de mise en cache du message de demande de transfert.

5. Appareil de pré-alerte d'une continuité d'appel vocal radio unique d'un utilisateur de terminaison, l'appareil étant appliqué dans une fonction de commande de transfert d'accès, ATCF, d'une extrémité de terminaison et comprenant :
un module de réception, configuré pour recevoir, avant la réception d'un SIP 180 sonnerie à partir d'un équipement utilisateur, UE, de l'extrémité de terminaison, un message de demande de transfert envoyé par l'extrémité de terminaison ;
un module de stockage, configuré pour mettre en cache le message de demande de transfert ; et
un module d'exécution, configuré pour, en cas de réception du SIP 180 sonnerie de l'extrémité de terminaison, exécuter l'opération de demande de transfert dans une procédure de continuité d'appel vocal radio unique d'alerte, aSRVCC, sur la base du message de demande de transfert mis en cache ; et en cas de réception d'un SIP 200 OK de l'extrémité de terminaison, exécuter l'opération de demande de transfert dans une procédure de continuité d'appel vocal radio unique améliorée, eSRVCC, sur la base du message de demande de transfert mis en cache.

6. Appareil de pré-alerte de continuité d'appel vocal radio unique selon la revendication 5, dans lequel le module de réception est configuré pour :
recevoir, avant la réception du SIP 180 sonnerie à partir de l'UE de l'extrémité de terminaison, le message de demande de transfert envoyé à partir d'une station de base et traité par un nœud de commande et un centre de commutation mobile amélioré en séquence.

7. Appareil de pré-alerte de continuité d'appel vocal radio unique selon la revendication 5, dans lequel le module d'exécution est configuré pour :
exécuter l'opération de demande de transfert dans la procédure aSRVCC dans un cas où le SIP 180 sonnerie de l'extrémité de terminaison est reçu dans un seuil de longueur de temps commençant à partir d'un moment de mise en cache du message de demande de transfert ;
ou,
exécuter l'opération de demande de transfert dans la procédure eSRVCC dans un cas où le SIP 200 OK de l'extrémité de terminaison est reçu dans un seuil de longueur de temps à partir d'un moment de mise en cache du message de demande de transfert.

8. Appareil de pré-alerte de continuité d'appel vocal radio unique selon la revendication 7, dans lequel le module d'exécution est en outre configuré pour :
réaliser directement l'opération de demande de transfert dans un cas où le SIP 180 sonnerie ou le SIP 200 OK de l'extrémité de terminaison n'est pas reçu dans le seuil de longueur de temps commençant à partir du moment de mise en cache du message de demande de transfert.

9. Support de stockage lisible, sur lequel est stocké un programme informatique, dans lequel le programme informatique, lorsqu'il est exécuté par un processeur, met en œuvre le procédé de pré-alerte de continuité d'appel vocal radio unique selon l'une quelconque des revendications 1 à 4.
